# EUROPEAN PATENT SPECIFICATION

(11) **EP 3 771 539 B1**
(45) Date of publication and mention of the grant of the patent: **19.04.2023**
(21) Application number: 19382671.6
(22) Date of filing: 01.08.2019
(51) Int. Cl.: B28B 1/00, B28B 3/20, B28B 3/26, B33Y 30/00, E04B 1/35, E04G 21/04

(54) **PRINTING HEADS FOR PRINTING WITH CEMENTITIOUS MATERIAL**
DRUCKKÖPFE ZUM DRUCKEN MIT ZEMENTMATERIAL
TÊTES D'IMPRESSION POUR L'IMPRESSION AVEC UN MATÉRIAU CIMENTAIRE

(43) Date of publication of application: 03.02.2021
(73) Proprietor: Fundación Tecnalia Research & Innovation, 48160 Derio - Bizkaia (ES)
(72) Inventor: Aramburu, Amaia, 48160 DERIO - BIZKAIA (ES); Calderón, Íñigo, 48160 DERIO - BIZKAIA (ES); Salvador, Alejandro, 48160 DERIO - BIZKAIA (ES); Castaño, Rubén, 48160 DERIO - BIZKAIA (ES)
(74) Representative: Balder IP Law, S.L.

(56) References cited:
- WO-A1-2017/116748
- CN-A- 106 592 980
- CN-A- 107 042 632
- US-A1- 2010 025 349

## Description

### TECHNICAL FIELD

The present invention relates to the field of 3D printers. More particularly, the invention relates to a device for a printer for printing with cementitious material and a method for printing with cementitious material.

### STATE OF THE ART

In the last decade, the popularity of devices that extrude fluid material, such as 3D printers, for the formation of objects has grown significantly. There have been many improvements in the 3D printing technology, thereby making these devices more appealing to both end consumers and the industry. Every year the cost of these devices has been reduced and the accuracy with which they are capable of forming objects has been increased.

Not only small objects can be built using 3D printers, but also larger objects or even structures. In this sense, the 3D printers are capable of printing with cementitious materials so that the resulting product has more solid mechanical properties. Usually, such 3D printers are cartesian coordinate printers in the form of gantry robots; by way of example, commonly owned patent application EP18382382 discloses in one embodiment one such printer.

These gantry robots are capable of moving the extrusion nozzle, i.e. the nozzle through which the cementitious material is discharged, in three axes: X, Y and Z; therefore, the nozzle may be moved along a lengthwise axis (e.g. X axis) of the printer, along a widthwise axis (e.g. Y axis) of the printer, and along a vertical axis (e.g. Z axis) of the printer. This, in turn, makes possible to print objects and structures layer-by-layer controlling the surface of each layer in the lengthwise and widthwise axes of the printer, and the layers are piled up in the vertical axis of the printer.

Even though these 3D printers have three degrees of freedom, each being one of the aforementioned axes, there are limitations in the products or structures that can be printed, or they can be printed but the quality of the same cannot be guaranteed or does not even meet the minimum quality requirements. This is so because at least an additional degree of freedom is necessary to properly print some products or structures, in particular the rotation of the extrusion nozzle about the axial direction thereof (e.g. around Z axis) so that the cementitious material may be discharged with the same nozzle but in a different manner. In this respect, not only the extrusion nozzles have discharge openings that are not circular, but also sudden changes in the direction of the gantry, such as corner forming trajectories, have an impact on the material discharging and may result in manufacturing defects due to the tearing of the material cord. Regarding the latter, the mechanisms for stopping the flow of cementitious material in many 3D printers are not completely effective since they get obstructed due to the size of the particles of the cementitious material and the maintenance thereof is cumbersome (for example, valve mechanisms), and/or they may tear the material bead to stop the discharging (for example, plate-like elements that rotate about 90° thereby cutting the bead).

CN106592980A discloses a gantry with a printing mechanism and a multi-functional mechanism arranged on a crossbeam so that they both can slide from side to side. The printing mechanism includes a swivel joint that enables the printing head to rotate 360° in horizontal and vertical planes. It discloses also the preamble of the appended claims 1 and 5.

US2010/025349A1 discloses a robotic gantry system that is both rigid and lightweight. The system comprises two columns and a bridge therebetween that lets the bridge slide vertically. The bridge is connected to one of the columns with a hinge that lets the bridge rotate vertically with respect to the to column so as to prevent jamming if there is a misalignment. A nozzle assembly is connected to the bridge in a slidable fashion.

Moveable robotic arms usually feature more than three degrees of freedom, but they are also more expensive than gantry robots and become less suitable the larger is the object to be printed. Therefore, there is an interest in improving 3D printers, preferably printers in the form of gantry robots, so that they are capable of printing additional objects and/or structures, and/or increase the quality of the resulting printed objects and/or structures.

### DESCRIPTION OF THE INVENTION

The devices, printers and methods of the present disclosure are intended to solve the shortcomings of prior art 3D printers for cementitious material(s), typically those of the gantry type, which usually feature three degrees of freedom as the extrusion nozzle through which the cementitious material(s) is discharged can be moved along lengthwise, widthwise and vertical axes of the printers.

A first aspect of the invention relates to a device comprising:
a first tubular body coupled to a first end of an extrusion tubular member, the first tubular body comprising a rolling bearing ring;
a printing head comprising:
   a second tubular body coupled to a second end of the first tubular body in fluid communication;
   a first member coupled to the second tubular body in fluid communication, the first member being C- or U- shaped; and
   an extrusion nozzle for discharging the cementitious material, the extrusion nozzle being coupled to the second tubular body in fluid communication by interposition of the first member, wherein the extrusion nozzle is coupled to the first member in fluid communication;
   means for rotating the printing head, said means being coupled to the first tubular body so as to rotate the second tubular body around a cylindrical axis thereof, the means comprising a motor; and
   means for stopping discharge of the cementitious material, said means comprising a second member adapted to fit within an open end of the first member so that it blocks an opening of the second tubular body for passage of the cementitious material from the second tubular body to the extrusion nozzle, and said means further comprising a mechanism for selectively moving the second member between at least two positions: a first position in which the second member is within the open end of the first member thereby blocking the passage of the cementitious material, and a second position in which the second member is not within the open end of the first member thereby not blocking the passage of the cementitious material.

The device is a printing head for a printer capable of printing with cementitious material, such type of printers being commonly referred to as 3D printers. To this end, the device is to be coupled to such a printer so that the latter effects the discharge of cementitious material through the device.

The printer, which may be, for example, the apparatus described in commonly owned patent application EP18382382, receives the cementitious material, optionally mixes it with a substance (e.g. a fiber reinforcement, a rheology modifier, a hardening accelerant or retardant), and delivers the cementitious material to a nozzle. Upon coupling the printing head to the printer, the printer delivers the cementitious material to the head through a discharge conduit so that the printing head discharges the material. As the printing head is rotatable, the extrusion nozzle can be rotated during operation of the printer (typically around the vertical or Z axis), thereby making possible the printing of objects and/or structures that require such rotation while the different layers are provided so that minimum quality requirements may be fulfilled.

The first tubular body comprises a rolling bearing ring therein that makes possible the rotation of the printing head around the vertical or Z axis. In this sense, the second tubular body is attached to the second end of the first tubular body such that the rolling bearing ring rotates the second tubular body and, thus, it rotates the rest of the printing head too. Also, the second tubular body attached to the second end of the first tubular body such that both are in fluid communication, which in turn makes possible the flow of cementitious material to the printing head.

The extrusion nozzle, which discharges the cementitious material through an opening thereof, is coupled to the second tubular body indirectly (i.e. with an intermediate component) such that they both are in fluid communication. In particular, the first member is interposed between the extrusion nozzle and the second tubular body. The extrusion nozzle rotates together with the second tubular body owing to the rolling bearing ring in the first tubular body.

When the second tubular body is adapted to support releasable coupling of the extrusion nozzle thereto, any one of the first member and the extrusion nozzle may be adapted to releasably couple to the second tubular body.

The means for rotating the printing head selectively force the rotation of the first tubular body, in turn rotating the rest of the printing head. Upon forcing an angular displacement of the first tubular body, the rolling bearing ring rotates the second tubular body.

The open end in the first member eases the provision and operation of an effective discharge blocking device. Part of the open portion of the first member coincides with both the opening in the second tubular body and the opening in the extrusion nozzle so that, upon blocking said part of the open portion, the passage of cementitious material from the second tubular body to the extrusion nozzle is blocked, thereby stopping the distance of material.

The mechanism moves the second member between the first and second positions so as to forbid or allow the discharge of cementitious material.

Preferably, the device further comprises a controller and/or the mechanism has one or more terminals connectable (for example with cables) to a controller of the printer so that the mechanism can be remotely actuated during operation of the printer.

In some embodiments, the device comprises the extrusion tubular member, the extrusion tubular member being coupled to the first tubular body and having a second end adapted for coupling to a discharge conduit of a printer for printing with cementitious material.

The device is to be coupled to the printer by means of the extrusion tubular member, which supports the rest of the device including the rotatable printing head. The extrusion tubular member is to be coupled to the discharge conduit of the printer in fluid communication so that the cementitious material may be delivered to the printing head.

In some other embodiments, the printer comprises the extrusion tubular member coupled to the discharge conduit thereof.

The printer may be provided with the extrusion tubular member, thus the first tubular body of the device is to be coupled to the printer by means of the extrusion tubular member of the latter in fluid communication.

In some embodiments, the means for rotating the printing head further comprise a belt and pulleys assembly coupled to the first tubular body, the motor being coupled to the belt and pulleys assembly.

The belt and pulleys assembly is a cost-effective means for rotating the printing head that, furthermore, involves little maintenance over time.

In some other embodiments, the means for rotating the printing head further comprise a set of gears, wherein at least a first gear of the set is coupled to the first tubular body and a second gear of the set is coupled to the motor.

The set of gears is also a cost-effective means for rotating the printing head. Over time the teeth of the gears may wear out due to the coupling thereof between different gears; in such cases, the maintenance of the set of gears involves replacing the affected gear(s) by new gear(s).

In some embodiments, the second tubular body is adapted to support releasable coupling of the extrusion nozzle thereto.

The second tubular body is adapted to allow exchange of extrusion nozzles so that different types of material discharge are possible in a straightforward manner, or simply for maintenance of the same extrusion nozzle. In this sense, the installed extrusion nozzle is detached from the second tubular body, and another (or the same) extrusion nozzle may be attached thereto.

To this end, the second tubular body comprises a detachable head adapted for coupling thereto and to which the extrusion nozzle may attach in fluid communication. The detachable head may have one or more protrusions or slots intended to cooperate with one or more protrusions or slots of the second tubular body so that the mechanical coupling is releasable. When the detachable head is detached from the second tubular body, the installed extrusion nozzle remains attached to the detachable head, therefore the nozzle is detached from the second tubular body. By way of example, the detachable head may be similar to that of a housing of a hydrant for which the head may be manually mounted thereon or dismounted therefrom, for instance upon rotating the detachable head so that protrusions of the detachable head or the housing are introduced into or exit from matching protrusions or slots of the housing or the head.

In some embodiments, the extrusion nozzle comprises a tank adapted to receive cementitious material.

The tank may be arranged within the inner opening of the extrusion nozzle and it may assist in the extrusion of the cementitious material, and/or it may assist in the storage of cementitious material that flows upwardly when cementitious material is being discharged.

Regarding the former, the provision of the tank is advantageous for improving how the cementitious material is deposited while forming an object or structure; owing to the tank, the extrusion nozzle can be pressed for compressing the layers while discharging the cementitious material at a low distance from the deposited layers (e.g. between 0,5 cm and 2,0 cm, for instance at a distance of about 1 cm).

With respect to the upward flow of cementitious material, this sometimes occurs when discharge of an amount of cementitious material is intended at a rate higher than a rate of deposition of the cementitious material. In these cases, the extrusion nozzle is not capable of discharging all the cementitious material thereby causing an upward flow of some material in the inner opening of the extrusion nozzle. Said upward flow of material reaches the tank and is temporarily stored there; the cementitious material present in the tank due to this upward flow may be manually removed by an operator later on, for example.

In some embodiments, the device further comprises means for adjusting a rotation axis of the printing head.

Such means make possible to dynamically and automatically displace and/or rotate the rotation axis of the printing head. In this way, the rotation axis may be partially or completely returned to an initial position and/or orientation (i.e. angle) if the rotation axis changes its position and/or orientation during operation or throughout the useful life of the device. The changes in position and/or orientation of the rotation axis are usually due to the wear of the components of the device; as the device is operated, the geometry, weight and inertia of the components are altered, thereby altering the rotation axis.

The means for adjusting a rotation axis of the printing head may comprise, for example, two or more magnets; at least a first magnet is arranged on the printing head or the first tubular body, and at least a second magnet is arranged on a fixed support such as a supporting plate where the motor is mounted. As the printing head rotates, the number of revolutions may be measured when the first and second magnets produce a magnetic field with a strong intensity (when the two magnets are close as the revolution is being completed). By adjusting the magnetic force between the magnets, the rotation axis may have its position or angle changed with respect to the magnet on the fixed support; accordingly, with the magnetic force adjustments the magnetic field is adjusted so as to attain a desired behavior in each revolution of the printing head during operation of the device.

In some embodiments, the second tubular body is metallic. For instance, the second tubular body is made of steel, stainless steel, iron, etc. In some other embodiments, the second tubular body is non-metallic. For instance, the second tubular body is made of plastic, for example a thermoplastic material such as Acrylonitrile Butadiene Styrene (i.e. ABS), Polylactic Acid (i.e. PLA), etc.

When the device comprises a second tubular body made out of a metallic material, it usually lasts longer than devices of embodiments that comprise a second tubular body made out of other materials. This is so because the metallic tubular body typically wears out at a slower rate than tubular bodies made out of non-metallic materials, however the weight of the device is influenced by the material of the second tubular body, therefore a device with metallic tubular body usually weighs more and requires a motor with greater torque than a device having a second tubular body made of a non-metallic material.

When the second tubular body is made out of plastic, it may be 3D-printed in ABS or PLA, therefore the replacement thereof when it is worn out is cost-effective.

In some embodiments, the mechanism for selectively moving the second member between the at least two positions comprises pneumatic means.

The second member is movable between the first and second positions using a pressurized gas such as pressurized air.

In some embodiments, the printer comprises a gantry for moving the discharge conduit, the gantry being preferably movable in three perpendicular directions or axes (e.g. X, Y and Z directions). In some other embodiments, the printer comprises a robotic arm for moving the discharge conduit, the robotic arm being preferably movable in three perpendicular directions or axes (e.g. X, Y and Z directions).

The device of the present disclosure is suitable for coupling to printers of the gantry type, which usually feature three or fewer degrees of freedom, but is also suitable for coupling to printers of the robotic arm type, which usually feature six degrees of freedom. Regarding the latter type of printers, the present device may be coupled to a discharge nozzle of the printer for making possible the rotation thereof, and/or for printing with a second cementitious material upon coupling to the discharge nozzle.

In some embodiments, the cementitious material comprises one of: concrete, microconcrete, cement, paste, and mortar. In some of these embodiments, the cementitious material further comprises one or more of: a fiber reinforcement for cementitious material, a rheology modifier for cementitious material, and a hardening accelerant or retardant for cementitious material.

A second aspect of the invention relates to a method for printing with cementitious material, comprising:
providing a printer for printing with cementitious material, the printer comprising a discharge conduit adapted to receive the cementitious material for discharge thereof;
coupling a device to the printer, the device comprising:
   a first tubular body having a first end adapted for coupling to a first end of an extrusion tubular member, the first tubular body comprising a rolling bearing ring;
   a printing head comprising:
      a second tubular body coupled to a second end of the first tubular body in fluid communication;
      an extrusion nozzle for discharging the cementitious material, the extrusion nozzle being coupled to the second tubular body in fluid communication by interposition of a first member, wherein the first member is coupled to the second tubular body such that the extrusion nozzle rotates together with the second tubular body, the first member is C- or U- shaped, and the extrusion nozzle being coupled to the first member;
   means for rotating the printing head, said means being coupled to the first tubular body so as to rotate the second tubular body around the cylindrical axis thereof, the means comprising a motor; and
   means for stopping discharge of the cementitious material, said means comprising a second member adapted to fit within an open end of the first member so that it blocks an opening of the second tubular body for passage of the cementitious material from the second tubular body to the extrusion nozzle, and said means further comprising a mechanism for selectively moving the second member between at least two positions: a first position in which the second member is within the open end of the first member thereby blocking the passage of the cementitious material, and a second position in which the second member is not within the open end of the first member thereby not blocking the passage of the cementitious material;
   selectively moving the second member between the first and second positions for blocking and unblocking the passage of the cementitious material while the cementitious material is being discharged through the extrusion nozzle.

The method according to the present disclosure makes possible to adapt an existing printer such that a printing head used by the same for discharging cementitious material is provided with a rotation capability. This, in turn, allows to print objects and/or structures that require such rotation while the different layers are provided so that minimum quality requirements may be fulfilled.

In some embodiments, the device comprises the extrusion tubular member, the extrusion tubular member being coupled to the first tubular body and having a second end adapted for coupling to the discharge conduit of the printer. In some other embodiments, the printer comprises the extrusion tubular member coupled to the discharge conduit thereof.

In some embodiments, the method further comprises selectively rotating the printing head while the cementitious material is being discharged through the extrusion nozzle and/or while the cementitious material is not being discharged through the extrusion nozzle.

In some embodiments, the means for rotating the printing head further comprise a belt and pulleys assembly coupled to the first tubular body, the motor being coupled to the belt and pulleys assembly.

In some other embodiments, the means for rotating the printing head further comprise a set of gears, wherein at least a first gear of the set is coupled to the first tubular body and a second gear of the set is coupled to the motor.

In some embodiments, the second tubular body is adapted to support releasable coupling of the extrusion nozzle thereto.

In some embodiments, the method further comprises: decoupling the extrusion nozzle from the second tubular body; and coupling a same or a different extrusion nozzle to the second tubular body when no extrusion nozzle is coupled to the second tubular body.

In some embodiments, the extrusion nozzle comprises a tank adapted to receive cementitious material. In some of these embodiments, the method further comprises discharging the cementitious material through the extrusion nozzle at a distance from deposited layers that is between 0,5 cm and 2,0 cm, and preferably at a distance between 0,75 cm and 1,25 cm, and more preferably at a distance of 1,0 cm.

In some embodiments, the method further comprises changing a position and/or an angle of a rotation axis of the printing head. To this end, in these embodiments the device further comprises means for adjusting a rotation axis of the printing head, for example a plurality of magnets.

In some embodiments, the second tubular body is metallic. For instance, the second tubular body is made of steel, stainless steel, iron, etc. In some other embodiments, the second tubular body is non-metallic. For instance, the second tubular body is made of plastic, for example a thermoplastic material such as ABS, PLA, etc.

In some embodiments, the mechanism for selectively moving the second member between the at least two positions comprises pneumatic means.

In some embodiments, the printer comprises a gantry for moving the discharge conduit, the gantry being preferably movable in three perpendicular directions or axes. In some other embodiments, the printer comprises a robotic arm for moving the discharge conduit, the robotic arm being preferably movable in three perpendicular directions or axes.

In some embodiments, the cementitious material comprises one of: concrete, microconcrete, cement, paste, and mortar. In some of these embodiments, the cementitious material further comprises one or more of: a fiber reinforcement for cementitious material, a rheology modifier for cementitious material, and a hardening accelerant or retardant for cementitious material.

A third aspect of the invention relates to a printer for printing with cementitious material, comprising: a discharge conduit adapted to receive the cementitious material for discharge thereof; and a device according to the first aspect of the invention coupled to the discharge conduit such that the device moves together with the discharge conduit.

In some embodiments, the printer further comprises a gantry for moving the discharge conduit, the gantry being preferably movable in three perpendicular directions or axes.

In some other embodiments, the printer further comprises a robotic arm for moving the discharge conduit.

Similar advantages as those described for the first aspect of the invention also apply to the third aspect of the invention.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a device in accordance with an embodiment, whereas Figure 2 shows the same device but without illustrating a protective housing thereof.
Figure 3 shows an exploded view of the device of Figure 1.
Figure 4 diagrammatically shows a cross-section of an extrusion nozzle for a device in accordance with an embodiment.

### DESCRIPTION OF WAYS OF CARRYING OUT THE INVENTION

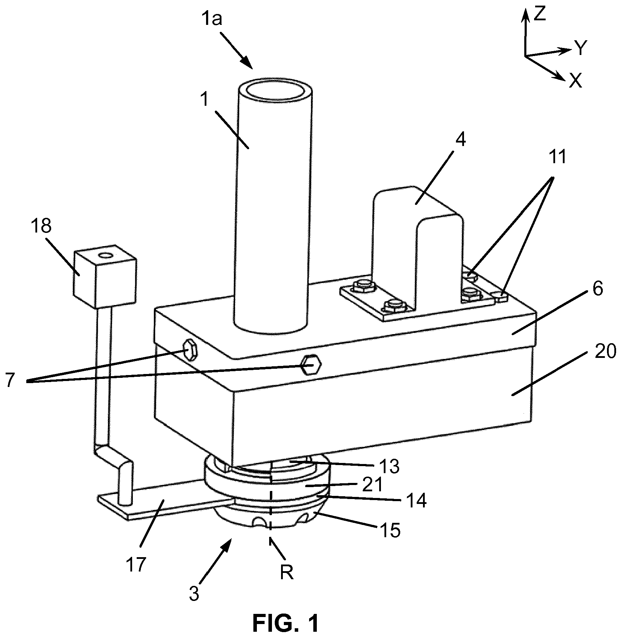

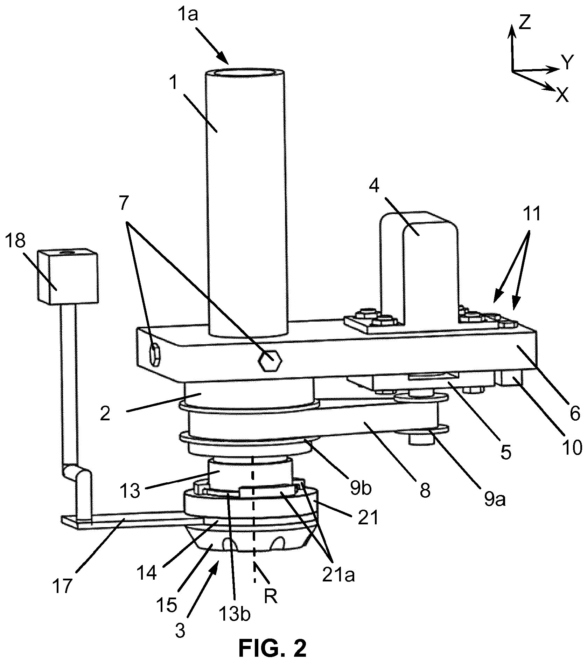

Figure 1 shows a device in accordance with an embodiment, whereas Figure 2 shows the same device but without illustrating a protective housing thereof.

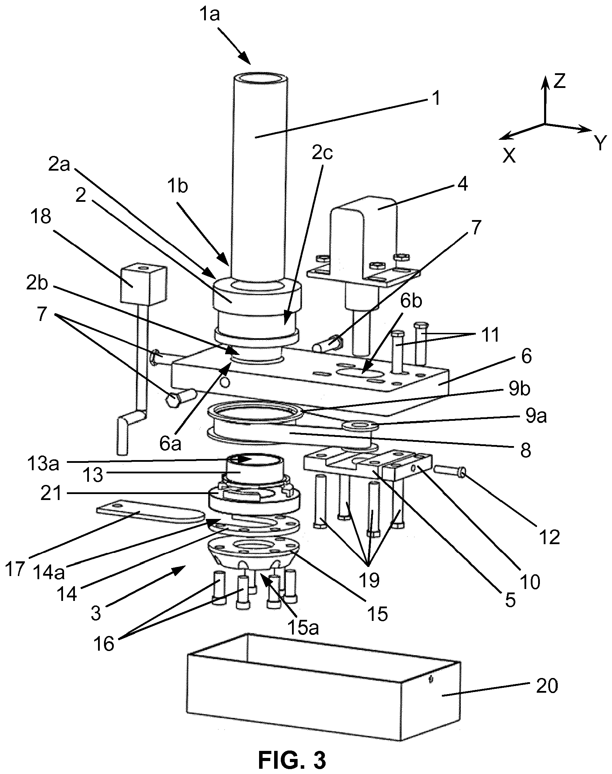

Figure 3 shows an exploded view of the device of Figure 1 in which some elements not seen in Figure 1 and/or 2 are illustrated.

The device is suitable as a head for a 3D printer capable of printing with cementitious material(s).

The device comprises an extrusion tubular member 1, a first tubular body 2 (seen in Figures 2 and 3) coupled thereto and within a protective housing 20 of the device, a printing head 3, means for rotating the printing head, and means for stopping discharge of cementitious material.

The extrusion tubular member 1 has a first end 1a attachable to a discharge conduit of the printer. Once the extrusion tubular member 1 is attached to the discharge conduit, it is in fluid communication with the latter so that the cementitious material may be delivered by the printer to the device. The cementitious material is then transferred to the first tubular body 2 owing to the coupling between a second end 1b (seen in Figure 3) of the extrusion tubular member 1 and a first end 2a (seen in Figure 3) of the first tubular body 2.

A supporting plate 6 is attached to the extrusion tubular member 1, which is introduced in a first through hole 6a of the supporting plate 6; preferably, fixing screws 7 keep the extrusion tubular member 1 attached thereto introduced in the first through hole 6a in a tight manner.

The first tubular body 2 comprises a rolling bearing ring (not seen in the Figures) therein that allows the rotation of the printing head 3 about a cylindrical axis R (shown in dashed lines for illustrative purposes only). In particular, the first tubular body 2 has a second end 2b (seen in Figure 3) thereof coupled to the printing head 3, in particular to a first end 13a (seen in Figure 3) of a second tubular body 13 thereof. Owing to the rolling bearing ring of the first tubular body 2, the second tubular body 13 can rotate about an axial direction R (i.e. the cylindrical or longitudinal axis) thereof, which in this example coincides with the Z axis represented.

The second tubular body 13, which may be made of metallic material or a non-metallic material, comprises a detachable head 21 coupled thereto in a releasable manner. The detachable head 21 comprises a plurality of protruding elements 21a that cooperate with one or more protruding elements 13b of the second tubular body 13; in this example, the protruding elements 21a of the detachable head 21 secure the head 21 to the second tubular body 13 upon rotating the head 21 around the second tubular body 13 as in a screw mechanism.

An extrusion nozzle 15 of the printing head 3 is coupled to the second tubular body 13, in particular to the detachable head 21, by way of a first member 14 of the means for stopping discharge of the cementitious material. The cementitious material can be transferred from the second tubular body 13 to the extrusion nozzle 15 owing to the opening of the detachable head 21, an open end 14a of the first member 14 and a discharge opening 15a of the extrusion nozzle 15; the discharge opening 15a may have different geometries as the geometry influences how the cementitious material is charged thereby altering how the different layers of the object or structure are printed. In this embodiment, a plurality of screws 16 keep the extrusion nozzle 15 attached to both the first member 14 and the detachable head 21, the latter in turn attached to the second tubular body in a releasable manner so that the extrusion nozzle 15 can be easily swapped by a different one, so that for example a discharge opening 15a with a different geometry is provided, or simply removed for cleaning it after printing an object or a structure. A different extrusion nozzle may be provided already attached to another detachable head so that installation thereof only requires securing the detachable head to the second tubular body 13.

In some other embodiments, extrusion tubular member 1 is part of the printer and the device does not comprise it. In such embodiments, the first tubular body 2 of the device is to be attached to said extrusion tubular member 1 of the printer in fluid communication so that the printer may discharge the cementitious material by means of the device.

In some other embodiments, not forming part of the invention, the extrusion nozzle 15 is directly attached to the second tubular body 13, i.e. not attached by means of the first member 14; in said embodiments, the device comprises alternate means for stopping discharge of the cementitious material or does not comprise such means. In some embodiments, the extrusion nozzle 15 is attached to either the first member 14 or the second tubular body 13 with attaching means different from screws 16 as known in the art, for example screws and nuts, adhesives, a clipping mechanism, etc. Also, in some other embodiments, the second tubular body 13 does not comprise a detachable head 21 and the extrusion nozzle 15 attaches to the second tubular body 13, either directly or indirectly by means of the first member 14; in these cases, withdrawal and installation of the nozzles is generally more cumbersome than in embodiments in which the second tubular body 13 is provided with the detachable head 21.

In addition to the first member 14, which is C- or U- shaped as can be seen in Figure 3 due to the open end 14a, the means for stopping discharge of the cementitious material further comprise a second member 17 that fits within the open end 14a of the first member 14, and which when introduced therein blocks the passage of cementitious material from the second tubular body 13 to the extrusion nozzle 15, thereby effectively stopping the discharge. Said means further comprise a mechanism 18 that moves or switches the second member 17 between a first position in which it blocks the passage of cementitious material (i.e. the second member 17 is introduced in the first member 14, as shown for instance in Figures 1 and 2) and a second position in which it does not block the passage of cementitious material (i.e. the second member 17 is outside from the first member, that is, it is not introduced in the first member).

The means for rotating the printing head comprise a motor 4 that is attached to the supporting plate 6. To this end, the supporting plate 6 comprises a second through hole 6b where the motor 4 is inserted so as to contact one of the pulleys 9a (the small, motive pulley 9a) of the belt and pulleys assembly 8, 9a, 9b of said means and which is underneath both the supporting plate 6 and a slotted fixing plate 5 for the motor 4. A plurality of nuts and tightening screws 19 keep the motor 4 and a slotted fixing plate 5 attached to the supporting plate 6, even though in other embodiments said attachment may be carried out with other attaching means known in the art. Further, a tightening bracket 10 is arranged next to the slotted fixing plate 5 and attached to the supporting plate 6 by means of shearing screws 11. In other embodiments, the motor 4 is coupled to the pulley 9a above the fixing plate 5 (i.e. the axis of the motor 4 does not go through the slot of the fixing plate 5, and the fixing plate 5 does not necessarily have to be provided with such slot); this can be achieved by selecting the size of the fixing plate 5, the size of the pulley 9a and positioning the holes for the plurality of nuts and tightening screws 19 so that the belt 8 does not collide with any of the fixing plate 5 and the screws 19.

The tightening bracket 10 comprises an additional through hole for receiving a tension screw 12, the hole being aligned with another hole in the slotted fixing plate 5 that also receives said tension screw 12. The tension of the belt 8 of the belt and pulleys assembly 8, 9a, 9b may be adjusted by modifying the distance between the tightening bracket 10 and the slotted fixing plate 5, said distance being modified with the tension screw 12. In addition, by modifying the position of the motor 4 using the plurality of nuts and tightening screws 19 the tension of the belt 8 may also be adjusted.

A large, passive pulley 9b is coupled to the first tubular body 2. To this end, the first tubular body 2 is preferably provided with a recess 2c on an outer side thereof so that the large, passive pulley 9b is arranged therein. The belt 8 transmits motion to the large, passive pulley 9b when the small, motive pulley 9a has applied the torque of the motor 4 thereto. In turn, the large, passive pulley 9b transmits the motion to the first tubular body 2 and, thus, to the printing head 3 so that they are rotated owing to both said pulley 9b and the rolling bearing ring. The extrusion nozzle 15 may discharge the cementitious material through the discharge opening 15a while the printing head 3 is rotated and while the printing head 3 is not rotated, and in both cases while the entire device is static or moved owing to a moving mechanism of the printer that the device is attached to, e.g. a gantry that moves the discharge conduit of the printer in a lengthwise dimension thereof (e.g. along the X axis represented), and/or in a widthwise dimension thereof (e.g. along the Y axis represented), and/or in a vertical dimension thereof (e.g. along the Z axis represented).

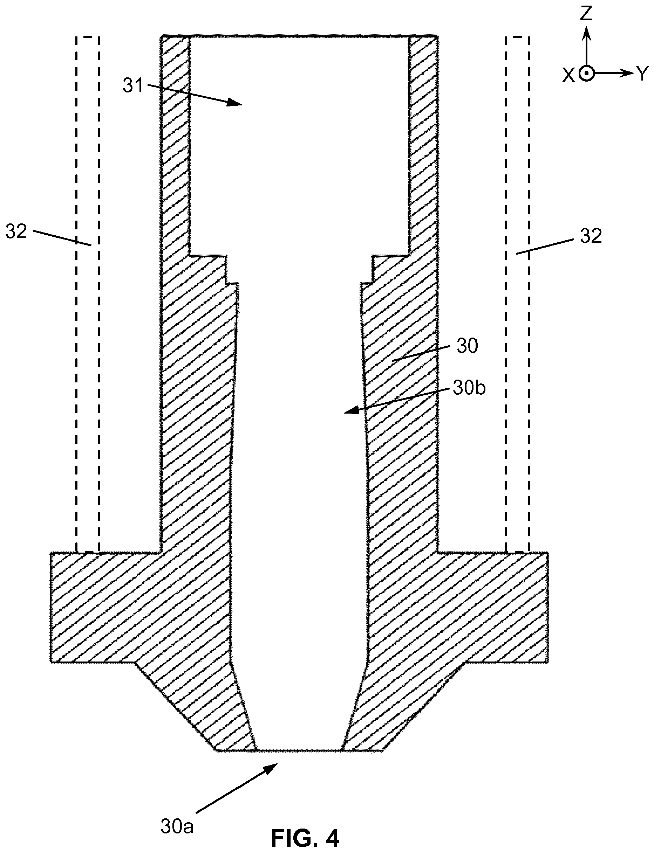

Figure 4 diagrammatically shows a cross-section of an extrusion nozzle 30 for a device in accordance with an embodiment.

The extrusion nozzle 30 comprises an inner opening 30b through which the cementitious material of a 3D printer is delivered to a discharge opening 30a.

A tank 31 is arranged in the extrusion nozzle 30, particularly in the inner opening 30b thereof, so that, for instance, when cementitious material flows in an upward direction (e.g. in the positive Z direction represented), the material reaches the tank 31 and is maintained there so that it does not block the passage of cementitious material through the inner opening 30b. Accordingly, in some cases the tank 31 makes possible the continued operation of the device (i.e. the cementitious material is discharged) even if an upward flow of cementitious material has occurred at some point.

In this figure there are also represented with dashed lines for illustrative purposes only, attaching means 32 that attach the extrusion nozzle 30 to a second tubular body of a device according to the present disclosure. The attaching means 32 may be, for example, a plurality of screws or the like.

In this text, the terms first, second, third, etc. have been used herein to describe several devices or elements, it will be understood that the devices or elements should not be limited by these terms since the terms are only used to distinguish one device or element from another. For example, the first tubular body could as well be named second tubular body, and the second tubular body could be named first tubular body without departing from the scope of this disclosure.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A device for a printer for printing with cementitious material, comprising:
a first tubular body (2) having a first end (2a) adapted for coupling to a first end (1b) of an extrusion tubular member (1), the first tubular body (2) comprising a rolling bearing ring;
a printing head (3) comprising:
a second tubular body (13) coupled to a second end (2b) of the first tubular body (2) in fluid communication;
a first member (14) coupled to the second tubular body (13) in fluid communication; and
an extrusion nozzle (15) for discharging the cementitious material, the extrusion nozzle (15) being coupled to the second tubular body (13) in fluid communication by interposition of the first member (14), which is coupled to the extrusion nozzle (15) in fluid communication; and
means for rotating the printing head (3), said means being coupled to the first tubular body (2) so as to rotate the second tubular body (13) around a cylindrical axis (R) thereof, the means comprising a motor (4);
**characterized in that:**
the first member (14) is C- or U- shaped; and
the device further comprises means for stopping discharge of the cementitious material, said means comprising a second member (17) adapted to fit within an open end of the first member (14) so that it blocks an opening of the second tubular body (13) for passage of the cementitious material from the second tubular body (13) to the extrusion nozzle (15), and said means further comprising a mechanism (18) for selectively moving the second member (17) between at least two positions:
a first position in which the second member (17) is within the open end of the first member (14) thereby blocking the passage of the cementitious material, and
a second position in which the second member (17) is not within the open end of the first member (14) thereby not blocking the passage of the cementitious material.

2. The device of claim 1, wherein the means for rotating the printing head (3) further comprise a belt and pulleys assembly (8, 9a, 9b) coupled to the first tubular body (2), the motor (4) being coupled to the belt and pulleys assembly (8, 9a, 9b).

3. The device of any one of the preceding claims, wherein the second tubular body (13) is adapted to support releasable coupling of the extrusion nozzle (15) thereto.

4. The device of any one of the preceding claims, wherein the device comprises the extrusion tubular member (1), the extrusion tubular member (1) being coupled to the first tubular body (2) and having a second end (1a) adapted for coupling to a discharge conduit of the printer.

5. A method for printing with cementitious material, comprising:
providing a printer for printing with cementitious material, the printer comprising a discharge conduit adapted to receive the cementitious material for discharge thereof;
coupling a device to the printer, the device comprising:
a first tubular body (2) having a first end (2a) adapted for coupling to a first end (1b) of an extrusion tubular member (1), the first tubular body (2) comprising a rolling bearing ring;
a printing head (3) comprising:
a second tubular body (13) coupled to a second end of the first tubular body (2) in fluid communication;
an extrusion nozzle (15) for discharging the cementitious material, the extrusion nozzle (15) being coupled to the second tubular body (13) in fluid communication by interposition of a first member (14), wherein the first member (14) is coupled to the second tubular body (13) such that the extrusion nozzle (15) rotates together with the second tubular body (13); and
means for rotating the printing head (3), said means being coupled to the first tubular body (2) so as to rotate the second tubular body (13) around a cylindrical axis (R) thereof, the means comprising a motor (4);
wherein the extrusion nozzle (15) is coupled to the first member (14);
**characterized in that:**
the first member (14) is C- or U- shaped;
the device further comprises means for stopping discharge of the cementitious material, said means comprising a second member (17) adapted to fit within an open end of the first member (14) so that it blocks an opening of the second tubular body (13) for passage of the cementitious material from the second tubular body (13) to the extrusion nozzle (15), and said means further comprising a mechanism (18) for selectively moving the second member (17) between at least two positions:
a first position in which the second member (17) is within the open end of the first member (14) thereby blocking the passage of the cementitious material, and
a second position in which the second member (17) is not within the open end of the first member (14) thereby not blocking the passage of the cementitious material; and
the method further comprises selectively moving the second member (17) between the first and second positions for blocking and unblocking the passage of the cementitious material while the cementitious material is being discharged through the extrusion nozzle (15).

6. The method of claim 5, further comprising selectively rotating the printing head (3) while the cementitious material is being discharged through the extrusion nozzle (15) and/or while the cementitious material is not being discharged through the extrusion nozzle (15).

7. The method of any one of claims 5-6, wherein the means for rotating the printing head (3) further comprise a belt and pulleys assembly (8, 9a, 9b) coupled to the first tubular body (2), the motor (4) being coupled to the belt and pulleys assembly (8, 9a, 9b).

8. The method of any one of claims 5-7, wherein the second tubular body (13) is adapted to support releasable coupling of the extrusion nozzle (15) thereto.

9. The method of claim 8, further comprising:
decoupling the extrusion nozzle (15) from the second tubular body (13); and
coupling a same or a different extrusion nozzle (15) to the second tubular body (13) when no extrusion nozzle (15) is coupled to the second tubular body (13).

10. The method of any one of claims 5-9, wherein:
the device comprises the extrusion tubular member (1), the extrusion tubular member (1) being coupled to the first tubular body (2) and having a second end (1a) adapted for coupling to the discharge conduit of the printer; or
the printer comprises the extrusion tubular member (1) coupled to the discharge conduit thereof.

11. The method of any one of claims 5-10, wherein the printer comprises a gantry for moving the discharge conduit in three perpendicular axes.

12. A printer for printing with cementitious material, comprising:
a discharge conduit adapted to receive the cementitious material for discharge thereof; and
a device according to any one of claims 1-4 coupled to the discharge conduit such that the device moves together with the discharge conduit.

13. The printer of claim 12, further comprising a gantry for moving the discharge conduit in three perpendicular axes.

## Patentansprüche

1. Vorrichtung für einen Drucker zum Drucken mit zementartigem Material, mit:
einem ersten rohrförmigen Körper (2), der ein erstes Ende (2a) aufweist, das zum Koppeln mit einem ersten Ende (1b) eines rohrförmigen Extrusionselementes (1) angepasst ist, wobei der erste rohrförmige Körper (2) einen Rollenlagerring aufweist;
einem Druckkopf (3), der aufweist:
einen zweiten rohrförmigen Körper (13), der mit einem zweiten Ende (2b) des ersten rohrförmigen Körpers (2) in Fluid-Kommunikation gekoppelt ist;
einem ersten Element (14), das mit dem zweiten rohrförmigen Körper (13) in Fluid-Kommunikation gekoppelt ist; und
einer Extrusionsdüse (15) zum Ausgeben des zementartigen Materials, wobei die Extrusionsdüse (15) in Fluid-Kommunikation mit dem zweiten rohrförmigen Körper (13) durch Zwischenanordnung des ersten Elements (14) gekoppelt ist, das mit der Extrusionsdüse (15) in Fluid-Kommunikation gekoppelt ist; und
Mitteln zum Drehen des Druckkopfes (3), wobei die Mittel mit dem ersten rohrförmigen Körper (2) gekoppelt sind, um den zweiten rohrförmigen Körper (13) um eine Zylinderachse (R) desselben zu drehen, wobei die Mittel einen Motor (4) aufweisen;
**dadurch gekennzeichnet, dass:**
das erste Element (14) C- oder U-förmig ist; und
die Vorrichtung weiterhin Mittel zum Stoppen der Ausgabe des zementartigen Materials aufweist, wobei die Mittel ein zweites Element (17) aufweisen, das angepasst ist, in ein offenes Ende des ersten Elements (14) zu passen, so dass es eine Öffnung des zweiten rohrförmigen Körpers (13) für einen Durchgang des zementartiges Materials von dem zweiten rohrförmigen Körper (13) zu der Extrusionsdüse (15) blockiert, und die Mittel weiterhin einen Mechanismus (18) zum wahlweisen Bewegen des zweiten Elements (17) zwischen zumindest zwei Positionen aufweist:
einer ersten Position, in der das zweite Element (17) innerhalb des offenen Endes des ersten Elements (14) ist, wodurch es den Durchgang des zementartigen Materials blockiert, und
einer zweiten Position, in der das zweite Element (17) nicht innerhalb des offenen Endes des ersten Elements (14) ist, wodurch es den Durchgang des zementartigen Materials nicht blockiert.

2. Vorrichtung nach Anspruch 1, wobei die Mittel zum Drehen des Druckkopfes (3) weiterhin eine Riemen- und Riemenscheibenanordnung (8, 9a, 9b) aufweisen, die mit dem ersten rohrförmigen Körper (2) gekoppelt ist, wobei der Motor (4) mit der Riemen- und Riemenscheibenanordnung (8, 9a, 9b) gekoppelt ist.

3. Vorrichtung nach irgendeinem der vorhergehenden Ansprüche, wobei der zweite rohrförmige Körper (13) angepasst ist, die Extrusionsdüse (15) lösbar damit zu koppeln.

4. Vorrichtung nach irgendeinem der vorhergehenden Ansprüche, wobei die Vorrichtung das rohrförmige Extrusionselement (1) aufweist, wobei das rohrförmige Extrusionselement (1) mit dem ersten rohrförmigen Körper (2) gekoppelt ist und ein zweites Ende (1a) aufweist, das zum Koppeln mit einem Ausgabekanal des Druckers angepasst ist.

5. Verfahren zum Drucken mit zementartigem Material, mit:
Bereitstellen eines Druckers zum Drucken mit zementartigem Material, wobei der Drucker einen Ausgabekanal aufweist, der angepasst ist, das zementartige Material zum Ausgeben desselben aufzunehmen;
Koppeln einer Vorrichtung mit dem Drucker, wobei die Vorrichtung aufweist:
einen ersten rohrförmigen Körper (2), der ein erstes Ende (2a) aufweist, das zum Koppeln mit einem ersten Ende (1b) eines rohrförmigen Extrusionselementes (1) angepasst ist, wobei der erste rohrförmige Körper (2) einen Rollenlagerring aufweist;
einen Druckkopf (3), der aufweist:
einen zweiten rohrförmigen Körper (13), der mit einem zweiten Ende des ersten rohrförmigen Körpers (2) in Fluid-Kommunikation gekoppelt ist;
eine Extrusionsdüse (15) zum Ausgeben des zementartigen Materials, wobei die Extrusionsdüse (15) mit dem zweiten rohrförmigen Körper (13) in Fluid-Kommunikation durch Zwischenanordnung eines ersten Elements (14) gekoppelt ist, wobei das erste Element (14) mit dem zweiten rohrförmigen Körper (13) derart gekoppelt ist, dass die Extrusionsdüse (15) zusammen mit dem zweiten rohrförmigen Körper (13) dreht; und
Mittel zum Drehen des Druckkopfes (3), wobei die Mittel mit dem ersten rohrförmigen Körper (2) gekoppelt sind, um den zweiten rohrförmigen Körper (13) um eine Zylinderachse (R) desselben zu drehen, wobei die Mittel einen Motor (4) aufweisen;
wobei die Extrusionsdüse (15) mit dem ersten Element (14) gekoppelt ist;
**dadurch gekennzeichnet, dass:**
das erste Element (14) C- oder U-förmig ist;
die Vorrichtung weiterhin Mittel zum Stoppen der Ausgabe des zementartigen Materials aufweist, wobei die Mittel ein zweites Element (17) aufweisen, das angepasst ist, in ein offenes Ende des ersten Elements (14) zu passen, so dass es eine Öffnung des zweiten rohrförmigen Körpers (13) für den Durchgang des zementartigen Materials von dem zweiten rohrförmigen Körper (13) zu der Extrusionsdüse (15) blockiert, und die Mittel weiterhin einen Mechanismus (18) zum wahlweisen Bewegen des zweiten Elements (17) zwischen zumindest zwei Positionen aufweist:
einer ersten Position, in der das zweite Element (17) innerhalb des offenen Endes des ersten Elements (14) ist, wodurch es den Durchgang des zementartigen Materials blockiert, und
einer zweiten Position, in der das zweite Element (17) nicht innerhalb des offenen Endes des ersten Elements (14) ist, wodurch es den Durchgang des zementartigen Materials nicht blockiert; und
das Verfahren weiterhin ein wahlweises Bewegen des zweiten Elements (17) zwischen der ersten und der zweiten Position zum Blockieren und Nicht-Blockieren des Durchgangs des zementartige Materials aufweist, während das zementartige Material durch die Extrusionsdüse (15) ausgegeben wird.

6. Verfahren nach Anspruch 5, weiterhin mit einem wahlweisen Drehen des Druckkopfes (3), während das zementartige Material durch die Extrusionsdüse (15) ausgegeben wird, und/oder während das zementartige Material nicht durch die Extrusionsdüse (15) ausgegeben wird.

7. Verfahren nach irgendeinem der Ansprüche 5-6, wobei die Mittel zum Drehen des Druckkopfes (3) weiterhin eine Riemen- und Riemenscheibenanordnung (8, 9a, 9b) aufweisen, die mit dem ersten rohrförmigen Körper (2) gekoppelt ist, wobei der Motor (4) mit der Riemen- und Riemenscheibenanordnung (8, 9a, 9b) gekoppelt ist.

8. Verfahren nach irgendeinem der Ansprüche 5-7, wobei der zweite rohrförmige Körper (13) angepasst ist, ein lösbares Koppeln der Extrusionsdüse (15) mit diesem zu unterstützen.

9. Verfahren nach Anspruch 8, weiterhin mit:
Entkoppeln der Extrusionsdüse (15) von dem zweiten rohrförmigen Körper (13); und
Koppeln einer selben oder einer verschiedenen Extrusionsdüse (15) mit dem zweiten rohrförmigen Körper (13), wenn keine Extrusionsdüse (15) mit dem zweiten rohrförmigen Körper (13) gekoppelt ist.

10. Verfahren nach irgendeinem der Ansprüche 5-9, wobei:
die Vorrichtung das rohrförmige Extrusionselement (1) aufweist, wobei das rohrförmige Extrusionselement (1) mit dem ersten rohrförmigen Körper (2) gekoppelt wird und ein zweites Ende (1a) aufweist, das zum Koppeln mit dem Ausgabekanal des Druckers angepasst ist; oder
der Drucker das rohrförmige Extrusionselement (1) aufweist, das mit dem Ausgabekanal desselben gekoppelt ist.

11. Verfahren nach irgendeinem der Ansprüche 5-10, wobei der Drucker ein Portal zum Bewegen des Ausgabekanals in drei senkrechten Achsen aufweist.

12. Drucker zum Drucken mit zementartigem Material, mit:
einem Ausgabekanal, der angepasst ist, das zementartige Material zum Ausgeben desselben aufzunehmen; und
einer Vorrichtung nach irgendeinem der Ansprüche 1-4, die mit dem Ausgabekanal derart gekoppelt ist, dass die Vorrichtung sich zusammen mit dem Ausgabekanal bewegt.

13. Drucker nach Anspruch 12, weiterhin mit einem Portal zum Bewegen des Ausgabekanals in drei senkrechten Achsen.

## Revendications

1. Dispositif pour une imprimante pour imprimer avec un matériau cimentaire, comprenant :
un premier corps tubulaire (2) ayant une première extrémité (2a) adaptée pour être couplée à une première extrémité (1b) d'un organe tubulaire d'extrusion (1), le premier corps tubulaire (2) comprenant une bague de roulement ;
une tête d'impression (3) comprenant :
un second corps tubulaire (13) couplé à une seconde extrémité (2b) du premier corps tubulaire (2) en communication fluidique ;
un premier organe (14) couplé au second corps tubulaire (13) en communication fluidique ; et
une buse d'extrusion (15) pour décharger le matériau cimentaire, la buse d'extrusion (15) étant couplée au second corps tubulaire (13) en communication fluidique avec interposition du premier organe (14), qui est couplé à la buse d'extrusion (15) en communication fluidique ; et
des moyens pour faire tourner la tête d'impression (3), lesdits moyens étant couplés au premier corps tubulaire (2) de manière à faire tourner le second corps tubulaire (13) autour d'un axe cylindrique (R) de celui-ci, les moyens comprenant un moteur (4) ;
**caractérisé en ce que**
le premier organe (14) est en forme de C ou de U ; et
le dispositif comprend en outre des moyens pour arrêter la décharge du matériau cimentaire, lesdits moyens comprenant un second organe (17) adapté pour s'ajuster à l'intérieur d'une extrémité ouverte du premier organe (14) de sorte à bloquer une ouverture du second corps tubulaire (13) pour le passage du matériau cimentaire du second corps tubulaire (13) à la buse d'extrusion (15), et lesdits moyens comprenant en outre un mécanisme (18) pour déplacer sélectivement le second organe (17) entre au moins deux positions :
une première position dans laquelle le second organe (17) se trouve à l'intérieur de l'extrémité ouverte du premier organe (14), bloquant ainsi le passage du matériau cimentaire, et
une seconde position dans laquelle le second organe (17) ne se trouve pas à l'intérieur de l'extrémité ouverte du premier organe (14), ne bloquant pas ainsi le passage du matériau cimentaire.

2. Dispositif de la revendication 1, dans lequel les moyens pour faire tourner la tête d'impression (3) comprennent en outre un ensemble de courroie et de poulies (8, 9a, 9b) couplé au premier corps tubulaire (2), le moteur (4) étant couplé à l'ensemble de courroie et de poulies (8, 9a, 9b).

3. Dispositif selon l'une quelconque des revendications précédentes, dans lequel le second corps tubulaire (13) est adapté pour supporter le couplage détachable de la buse d'extrusion (15) à celui-ci.

4. Dispositif de l'une quelconque des revendications précédentes, dans lequel le dispositif comprend l'organe tubulaire d'extrusion (1), l'organe tubulaire d'extrusion (1) étant couplé au premier corps tubulaire (2) et ayant une seconde extrémité (1a) adaptée pour être couplée à un conduit de décharge de l'imprimante.

5. Procédé d'impression avec un matériau cimentaire, comprenant :
la fourniture d'une imprimante pour imprimer avec un matériau cimentaire, l'imprimante comprenant un conduit de décharge adapté pour recevoir le matériau cimentaire pour sa décharge ;
le couplage d'un dispositif à l'imprimante, le dispositif comprenant :
un premier corps tubulaire (2) ayant une première extrémité (2a) adaptée pour être couplée à une première extrémité (1b) d'un organe tubulaire d'extrusion (1), le premier corps tubulaire (2) comprenant une bague de roulement ;
une tête d'impression (3) comprenant :
un second corps tubulaire (13) couplé à une seconde extrémité du premier corps tubulaire (2) en communication fluidique ;
une buse d'extrusion (15) pour décharger le matériau cimentaire, la buse d'extrusion (15) étant couplée au second corps tubulaire (13) en communication fluidique avec interposition d'un premier organe (14), le premier organe (14) étant couplé au second corps tubulaire (13) de telle sorte que la buse d'extrusion (15) tourne avec le second corps tubulaire (13) ; et
des moyens pour faire tourner la tête d'impression (3), lesdits moyens étant couplés au premier corps tubulaire (2) de manière à faire tourner le second corps tubulaire (13) autour d'un axe cylindrique (R) de celui-ci, les moyens comprenant un moteur (4) ;
la buse d'extrusion (15) étant couplée au premier organe (14) ;
**caractérisé en ce que**
le premier organe (14) est en forme de C ou de U ;
le dispositif comprend en outre des moyens pour arrêter la décharge du matériau cimentaire, lesdits moyens comprenant un second organe (17) adapté pour s'ajuster à l'intérieur d'une extrémité ouverte du premier organe (14) de sorte à bloquer une ouverture du second corps tubulaire (13) pour le passage du matériau cimentaire du second corps tubulaire (13) à la buse d'extrusion (15), et lesdits moyens comprenant en outre un mécanisme (18) pour déplacer sélectivement le second organe (17) entre au moins deux positions :
une première position dans laquelle le second organe (17) se trouve à l'intérieur de l'extrémité ouverte du premier organe (14), bloquant ainsi le passage du matériau de cimentation, et
une seconde position dans laquelle le second organe (17) ne se trouve pas à l'intérieur de l'extrémité ouverte du premier organe (14), ne bloquant pas ainsi le passage du matériau cimentaire ; et
le procédé comprend en outre le déplacement sélectif du second organe (17) entre les première et seconde positions pour bloquer et débloquer le passage du matériau cimentaire pendant que le matériau cimentaire est déchargé à travers la buse d'extrusion (15).

6. Procédé selon la revendication 5, comprenant en outre la rotation sélective de la tête d'impression (3) pendant que le matériau cimentaire est déchargé à travers la buse d'extrusion (15) et/ou pendant que le matériau cimentaire n'est pas déchargé à travers la buse d'extrusion (15).

7. Procédé selon l'une quelconque des revendications 5-6, dans lequel les moyens pour faire tourner la tête d'impression (3) comprennent en outre un ensemble de courroie et poulies (8, 9a, 9b) couplé au premier corps tubulaire (2), le moteur (4) étant couplé à l'ensemble de courroie et poulies (8, 9a, 9b).

8. Procédé selon l'une quelconque des revendications 5-7, dans lequel le second corps tubulaire (13) est adapté pour supporter le couplage détachable de la buse d'extrusion (15) à celui-ci.

9. Procédé selon la revendication 8, comprenant en outre :
le découplage de la buse d'extrusion (15) du second corps tubulaire (13) ; et
le couplage d'une buse d'extrusion identique ou différente (15) au second corps tubulaire (13) lorsqu'aucune buse d'extrusion (15) n'est couplée au second corps tubulaire (13).

10. Procédé selon l'une quelconque des revendications 5-9, dans lequel :
le dispositif comprend l'organe tubulaire d'extrusion (1), l'organe tubulaire d'extrusion (1) étant couplé au premier corps tubulaire (2) et ayant une seconde extrémité (1a) adaptée pour être couplée au conduit de décharge de l'imprimante ; ou
l'imprimante comprend l'organe tubulaire d'extrusion (1) couplé à son conduit de décharge.

11. Procédé selon l'une quelconque des revendications 5-10, dans lequel l'imprimante comprend un portique pour déplacer le conduit de décharge selon trois axes perpendiculaires.

12. Imprimante pour imprimer avec un matériau cimentaire, comprenant :
un conduit de décharge adapté pour recevoir le matériau cimentaire pour sa décharge ; et
un dispositif selon l'une quelconque des revendications 1-4 couplé au conduit de décharge de telle sorte que le dispositif se déplace avec le conduit de décharge.

13. Imprimante selon la revendication 12, comprenant en outre un portique pour déplacer le conduit de décharge selon trois axes perpendiculaires.
